# EUROPÄISCHE PATENTSCHRIFT

(11) **EP 2 720 964 B1**
(45) Veröffentlichungstag und Bekanntmachung des Hinweises auf die Patenterteilung: **04.03.2015**
(21) Anmeldenummer: 12721297.5
(22) Anmeldetag: 16.05.2012
(51) Int. Cl.: B65G 15/34, B65G 15/36, B65G 15/40

(54) **FÖRDERANLAGE MIT EINEM HYBRID-FÖRDERGURT**
CONVEYING SYSTEM HAVING A HYBRID CONVEYOR BELT
CONVOYEUR À BANDE TRANSPORTEUSE HYBRIDE

(30) Priorität: 14.06.2011 DE 102011051035
(43) Veröffentlichungstag der Anmeldung: 23.04.2014
(73) Patentinhaber: Phoenix Conveyor Belt Systems GmbH, 07422 Bad Blankenburg (DE)
(72) Erfinder: KÜSEL, Bernd, 21077 Hamburg (DE)
(74) Vertreter: Preusser, Andrea
(86) Internationale Anmeldenummer: PCT/EP2012/059110
(87) Internationale Veröffentlichungsnummer: WO 2012/171741

(56) Entgegenhaltungen:
- EP-B1- 0 336 385
- WO-A1-2008/034483
- DE-A1- 3 801 120
- DE-A1-102008 045 587
- DE-B4- 4 333 839
- GB-A- 268 133

## Beschreibung

Die Erfindung betrifft eine Förderanlage mit einem Fördergurt mit einer tragseitigen und laufseitigen Deckplatte aus jeweils einem polymeren Werkstoff mit elastischen Eigenschaften und mit einem eingebetteten Zugträger sowie mit einer innerhalb der tragseitigen und/oder laufseitigen Deckplatte angeordneten Querarmierung, wobei sich die laufseitige Deckplatte an Tragrollen abstützt, und zwar unter Ausbildung eines ersten Abschnitts einer Förderanlage mit einem Muldenfördergurt und eines zweiten Abschnitts einer Förderanlage mit einem Rohrfördergurt.

Die tragseitige und laufseitige Deckplatte bestehen zumeist jeweils aus einer Kautschukmischung, enthaltend eine Kautschukkomponente oder einen Kautschukkomponentenverschnitt, ein Vernetzungsmittel oder ein Vernetzungssystem, umfassend ein Vernetzungsmittel und einen Beschleuniger, sowie zumeist weitere Mischungsingredienzien, insbesondere einen Füllstoff und/oder ein Verarbeitungshilfsmittel und/oder ein Alterungsschutzmittel und/oder einen Weichmacher und/oder sonstige Zusatzstoffe (z.B. Fasern, Farbpigmente). Die diesbezügliche Kautschukbasis ist insbesondere:
Naturkautschuk (NR)
Butadien-Kautschuk (BR)
Chloropren-Kautschuk (CR)
Styrol-Butadien-Kautschuk (SBR)
Nitrilkautschuk (NBR)
Butylkautschuk (IIR)
Ethylen-Propylen-Kautschuk (EPM)
Ethylen-Propylen-Dien-Kautschuk (EPDM)
SBR/NR-Verschnitt
SBR/BR-Verschnitt
NR/BR-Verschnitt

Von besonderer Bedeutung ist bislang CR, das sich durch eine hohe Flamm-, Witterungs- und Alterungsbeständigkeit auszeichnet, insbesondere für Fördergurte mit Einsatz im Untertagebergbau. Im Übertagebergbau haben ferner NR sowie die oben erwähnten Verschnitte (DE 10 2009 043 904 A1) eine größere Bedeutung erlangt.

Bedingt durch die Vulkanisation einer Kautschukmischung der oben genannten Art erfährt der Fördergurt die erforderlichen elastischen Eigenschaften.

Als eingebettete Zugträger kommen in Fördergurtlängsrichtung verlaufende Seile aus Stahl oder Aramid zum Einsatz, wobei Seile aus Stahl von besonderer Bedeutung sind. Insbesondere in Verbindung mit Stahlseil-Fördergurten wird zwecks Schlitzschutz zusätzlich eine innerhalb der tragseitigen und/oder laufseitigen Deckplatte eingebettete Querarmierung aus Synthesecorden, beispielsweise aus Polyamid, verwendet (WO 2008/034483 A1). Der Zugträger kann auch ein textiles Flächengebilde, insbesondere ein ein- oder mehrlagiges Gewebe, beispielsweise ein Polyester-Polyamid-Gewebe, sein.

Wesentliche Bauteile einer Förderanlage mit einem Obertrum und Untertrum sind Trommeln (Antriebstrommel, Umkehrtrommel), Tragrollen und Traggerüste. Weitere Bauteile einer Förderanlage können eine Aufgabeschurre, Umlenkrollen im Bereich des Untertrums sowie Fördergurtprofile aus einem polymeren Werkstoff, beispielsweise Randprofile, sein. Viele Förderanlagen, insbesondere Großförderanlagen, werden heute zudem mit einem Überwachungssystem, beispielsweise mittels Kameraüberwachung oder Röntgenstrahlen, ausgestattet.

Zumeist erfolgt die Führung eines Fördergurtes in einer Förderanlage in geöffneter Form, und zwar im Rahmen eines gemuldeten Tragrollenstuhls. Dabei ist aus der Offenlegungsschrift DE 10 2008 045 587 A1 bekannt, bei besonders stark beanspruchten Fördergurten eine Querarmierung einzusetzen, die in Laufrichtung des Fördergurtes wenigstens zwei Gruppen von Quercorden umfasst, die sich durch eine unterschiedliche Länge in Querarmierungsrichtung auszeichnen. Ferner wird in der nachveröffentlichten Patentanmeldung DE 10 2010 000 588.6 ein kurvengängiger Fördergurt, insbesondere Stahlseil-Fördergurt, und eine Förderanlage hierzu vorgestellt. Hiernach ist der Zugträger ausschließlich innerhalb des Mittenbereichs des Fördergurtes angeordnet. Zudem ist wenigstens innerhalb der beiden Randbereiche des Fördergurtes ein dehnungsfähiges Gewebe oder in Fördergurtquerrichtung verlaufende dehnungsfähige Einzelcorde aus jeweils einem textilen Werkstoff im Fördergurt eingebettet, und zwar innerhalb der tragseitigen und/oder laufseitigen Deckplatte.

Gemuldete Fördergurte zeichnen sich durch eine hohe Förderleistung und einen geringen Energieverbrauch aus. Gemuldete Fördergurte müssen möglichst eben (plan) sein. Dies wird durch die gewöhnliche Bauart problemlos gewährleistet. Die Fördergurte liegen üblicherweise auf drei- oder fünfteiligen Tragrollen. Das Fördergut liegt angehäuft und ungeschützt auf der tragseitigen Deckplatte des Fördergurtes.

In den letzten 20 Jahren ist jedoch das geschlossene Fördersystem unter Einsatz eines Rohrfördergurtes entscheidend weiterentwickelt worden. Innerhalb der Ein- und Auslaufstrecke ist der Fördergurt wie bei den konventionellen Gurtförderern gemuldet. Auf der Transport- und Rücklaufstrecke schließt sich jedoch der Fördergurt und bildet eine Röhre (Rohrfördergurt, Schlauchgurt, Rollgurt). Für dieses Transportsystem werden ringförmig angeordnete Tragrollen sowie gegebenenfalls zusätzliche Korrekturrollen benötigt. Neben den konventionellen Gurtförderern zeichnet sich das geschlossene Transportbandsystem durch folgende Vorteile aus:
- es ist besonders kurvengängig;
- es hat eine besonders hohe Steigfähigkeit;
- es ist platzsparend;
- es schützt das Fördergut sowie die Umwelt, beispielsweise bei Staub oder radioaktivem Fördergut.

Wichtig ist, dass sich Rohrfördergurte leicht zu einem Kreis formen lassen, um die Bewegungswiderstände durch hohen Anpressdruck an die umgebenden Tragrollen gering zu halten. Rohrfördergurte nehmen im Lauf der Zeit durch bleibende Verformung der verarbeiteten Komponenten die runde Form an, was in der Regel vorteilhaft für die Funktion und den Energieverbrauch des Fördergurtes ist.

Hinsichtlich des diesbezüglichen Standes der Rohrfördergurttechnik wird insbesondere auf folgende Patentliteratur verwiesen:
DE 36 06 129 A1
DE 36 12 765 A1
DE 43 33 839 B4
DE 10 2009 003 552 A1
EP 0 336 385 B1

Anwendungen, in denen der Einsatz beider Fördergurtausführungen, nämlich eines Muldenfördergurtes und eines Rohrfördergurtes innerhalb bestimmter Anlagenabschnitte gefordert werden, nehmen zwischenzeitlich zu, wobei insbesondere auf folgende Beispiele verwiesen wird:
- Gewünscht ist diese gemischte Anlagenkonzeption bei der Überquerung von Flüssen und Tälern, wo wegen der Gewichtsgrenzen keine Abdeckungen der Förderanlage möglich sind. Ein Rohrfördergurt schützt das Fördermaterial wie auch die Umwelt. Das Gleiche gilt auch für windreiche Strecken.
- Nur Teilbereiche der gesamten Förderanlage liegen in Kurven. Bisher werden solche Fälle mit einer Aneinanderreihung von Muldenfördergurten und Rohrfördergurten, die mittels Fördermaterialübergaben verbunden sind, gelöst. Diese Übergabestationen sind jedoch teuer, wartungsintensiv und zudem sehr verschleißfördernd.

Die Aufgabe der Erfindung besteht nun darin, eine Förderanlage bereitzustellen, dessen Fördergurt derart gestaltet ist, dass dieser sowohl die Form eines Muldenfördergurtes als auch die eines Rohrfördergurtes annimmt (Hybrid-Fördergurt).
Gelöst wird diese Aufgabe durch eine Förderanlage mit den Merkmalen des Anspruchs 1. Hinsichtlich der Querarmierung kommt folgendes Werkstoffkonzept zum Tragen:
- Die Querarmierung besteht aus einem Formgedächtniswerkstoff, der derart beschaffen ist, dass die Rückstellung in die Ausgangsform, die sich auf die gestreckte Lage bezieht, durch Einwirken eines externen Impulses möglich ist, beispielsweise mittels eines Magnetfeldes oder bei einer bestimmten Temperatur oder unter optischen Einflüssen. Bei Einsatz dieses Werkstoffes würde der Fördergurt vor dem Öffnen in die Muldenform diesem Impuls ausgesetzt werden und in die ursprüngliche, gestreckte Form zurückgehen.

Hinsichtlich des Formgedächtniswerkstoffes kommen insbesondere folgende beiden Werkstoffvarianten zum Einsatz:

### Formgedächtnispolymer (Shape Memory Polymer; SMP)

Ein Formgedächtspolymer ist beispielsweise ein thermoplastisches Polyurethan, erhältlich durch Umsetzung von einer Isocyanatkomponente mit einer Polyolkomponente. Diesbezüglich wird insbesondere auf die Offenlegungsschrift DE 10 2005 021 366 A1 verwiesen.

### Formgedächtnislegierung (Shape Memory alloy; SMA)

Derartige Formgedächtnislegierungen werden oft auch als Memorymetalle bezeichnet. Beispielhafte Legierungen sind:
Nickel-Titan (NiTi)
Kupfer-Zink (CuZn)
Kupfer-Zink-Aluminium (CuZnAl)
Kupfer-Aluminium-Nickel (CuAINi)
Eisen-Nickel-Aluminium (FeNiAl)

Hinsichtlich Details der Formgedächtnislegierungen wird auf Wikipedia, der freien Enzyklopädie, verwiesen.

Die Erfindung wird nun anhand von Ausführungsbeispielen unter Bezugnahme auf schematische Zeichnungen näher erläutert. Es zeigen:
- Fig. 1: den ersten Abschnitt einer Förderanlage mit einem Muldenfördergurt;
- Fig. 2: den zweiten Abschnitt einer Förderanlage mit einem Rohrfördergurt;
- Fig. 3: eine Querarmierung in Form eines Cordgewebes bei gleich langen Quercorden;
- Fig. 4: eine Querarmierung in Form von Einzelquercorden unterschiedlicher Länge in Fördergurtquerrichtung.

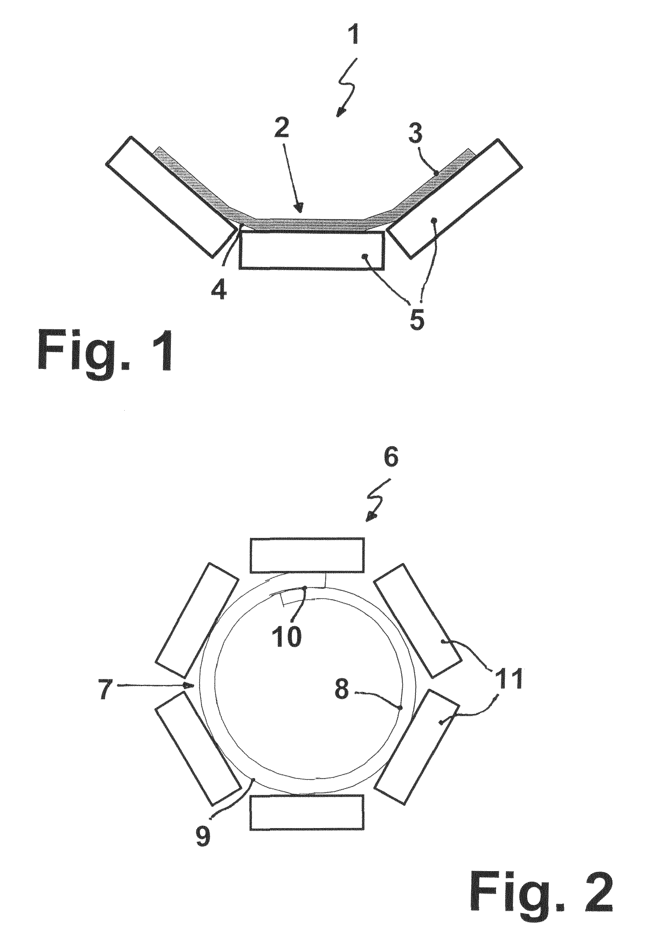

Fig. 1 zeigt den ersten Abschnitt einer Förderanlage 1 mit einem Fördergurt 2 in Form eines Muldenfördergurtes. Der Fördergurt umfasst dabei eine tragseitige Deckplatte 3 und eine laufseitige Deckplatte 4 aus jeweils einer vulkanisierten Kautschukmischung, beispielsweise auf der Basis von CR. Die laufseitige Deckplatte 4 stützt sich dabei auf Tragrollen 5 ab. Die Tragrollen bilden dabei einen gemuldeten Tragrollenstuhl. Hinsichtlich weiterer Anlagenteile wird auf die Beschreibung zum Stand der Technik verwiesen.

Fig. 2 zeigt den zweiten Abschnitt einer Förderanlage 6 mit einem Fördergurt 7 in Form eines Rohrfördergurtes mit einem Überlappungsbereich 10 der beiden korrespondierenden Gurtrandbereiche. Der Fördergurt umfasst auch hier eine tragseitige Deckplatte 8 und eine laufseitige Deckplatte 9 aus jeweils einer vulkanisierten Kautschukmischung, beispielsweise wiederum auf der Basis von CR. Die laufseitige Deckplatte 9 stützt sich an ringförmig angeordneten Tragrollen 11 ab. Hinsichtlich weiterer Anlagenteile wird insbesondere auf die in der Beschreibung zitierte Rohrfördergurttechnik verwiesen.

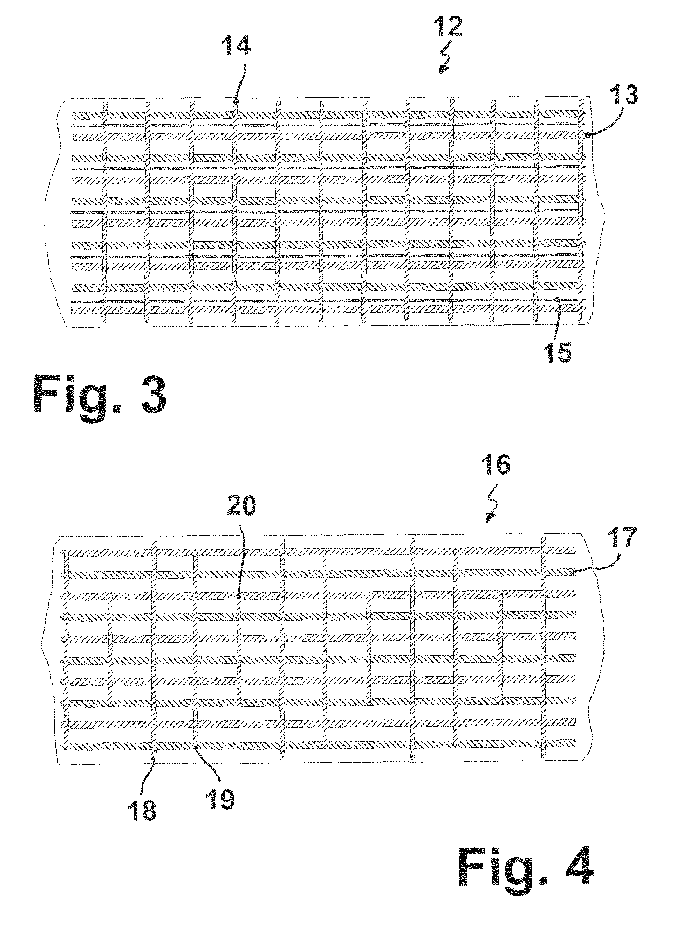

In den Fördergurt 2 (Fig. 1) und 7 (Fig. 2) ist jeweils ein Zugträger eingebettet, insbesondere in Form von Stahlseilen. Innerhalb der jeweiligen tragseitigen und/oder laufseitigen Deckplatte ist eine Querarmierung angeordnet. Dieses Innenleben eines Fördergurtes wird nun in Verbindung mit den Fig. 3 und 4 näher erläutert.

Fig. 3 zeigt eine Querarmierung 12 in Form eines Cordgewebes, umfassend Quercorde 14, die quer zum Zugträger 13 verlaufen, und in Fördergurtlängsrichtung (Zugträgerrichtung) verlaufende Kettfäden 15. Die Quercorde bestehen aus einem Formgedächtniswerkstoff.

Fig. 4 zeigt eine Querarmierung 16, bestehend aus Einzelquercorden 18, 19 und 20, die quer zum Zugträger 17 angeordnet sind. Diese Einzelquercorde, die wiederum aus einem Formgedäcchtniswerkstoff bestehen, zeichnen sich in Fördergurtquerrichtung durch eine unterschiedliche Länge aus. Dabei treten im Rahmen eines sich stets gleichmäßig wiederholenden Anordnungsprinzipes drei Querarmierungsgruppen auf, nämlich: Einzelquercord 18: lang (im Wesentlichen über die gesamte Fördergurtbreite) Einzelquercord 19: mittellang (nichterfassend die beiden Gurtrandbereiche) Einzelquercord 20: kurz (nur den Gurtmittenbereich erfassend)

Auch eine Querarmierung mit zwei Querarmierungsgruppen, beispielsweise aus den Einzelquercorden 18 und 20, ist eine mögliche Querarmierungsvariante.

### Bezugszeichenliste

### (Teil der Beschreibung)

- 1: Förderanlage
- 2: Fördergurt (Muldenfördergurt)
- 3: tragseitige Deckplatte
- 4: laufseitige Deckplatte
- 5: Tragrollen
- 6: Förderanlage
- 7: Fördergurt (Rohrfördergurt)
- 8: tragseitige Deckplatte
- 9: laufseitige Deckplatte
- 10: Überlappungsbereich
- 11: Tragrollen
- 12: Querarmierung
- 13: Zugträger
- 14: Quercord
- 15: Kettfäden
- 16: Querarmierung
- 17: Zugträger
- 18: Einzelquercord
- 19: Einzelquercord
- 20: Einzelquercord

## Patentansprüche

1. Förderanlage (1, 6) mit einem Fördergurt (2, 7) mit einer tragseitigen Deckplatte (3, 8) und einer laufseitigen Deckplatte (4, 9) aus jeweils einem polymeren Werkstoff mit elastischen Eigenschaften und mit einem eingebetteten Zugträger (13, 17) sowie mit einer innerhalb der tragseitigen und/oder laufseitigen Deckplatte angeordneten Querarmierung (12, 16), wobei sich die laufseitige Deckplatte an Tragrollen (5, 11) abstützt, und zwar unter Ausbildung eines ersten Abschnitts einer Förderanlage (1) mit einem Muldenfördergurt (2) und eines zweiten Abschnitts einer Förderanlage (6) mit einem Rohrfördergurt (7), **dadurch gekennzeichnet, dass** die Querarmierung (12, 16) des Fördergurtes (2, 7) aus einem Formgedächtniswerkstoff besteht, wobei der Formgedächtniswerkstoff derart beschaffen ist, dass die Rückstellung in die Ausgangsform, die sich auf die gestreckte Lage bezieht, durch Einwirkung eines externen Impulses möglich ist.

2. Förderanlage nach Anspruch 1, **dadurch gekennzeichnet, dass** die Querarmierung (12, 16) aus einem Formgedächtnispolymer besteht.

3. Förderanlage nach Anspruch 1, **dadurch gekennzeichnet, dass** die Querarmierung (12, 16) aus einer Formgedächtnislegierung besteht.

4. Förderanlage nach einem der Ansprüche 1 bis 3, **dadurch gekennzeichnet, dass** die Querarmierung (16) wenigstens zwei Querarmierungsgruppen aufweist, die sich in Fördergurtquerrichtung durch eine unterschiedliche Länge auszeichnen.

## Claims

1. Conveying system (1, 6) having a conveyor belt (2, 7) with a carrying-side covering sheet (3, 8) and a running-side covering sheet (4, 9) each made from a polymeric material with elastic properties and with an embedded tension member (13, 17) and with a transverse reinforcement (12, 16), which is arranged within the carrying-side and/or running-side covering sheet, wherein the running-side covering sheet is supported on carrying rollers (5, 11), to be precise to form a first section of a conveying system (1) with a trough conveyor belt (2) and a second section of a conveying system (6) with a pipe conveyor belt (7), **characterized in that** the transverse reinforcement (12, 16) of the conveyor belt (2, 7) consists of a shape-memory material, the shape-memory material being of such a kind that the reversion to the original shape, referring to the outstretched position, is possible by it being subjected to the effect of an external impulse.

2. Conveying system according to Claim 1, **characterized in that** the transverse reinforcement (12, 16) consists of a shape-memory polymer.

3. Conveying system according to Claim 1, **characterized in that** the transverse reinforcement (12, 16) consists of a shape-memory alloy.

4. Conveying system according to one of Claims 1 to 3, **characterized in that** the transverse reinforcement (16) has at least two transverse reinforcement groups, which are distinguished by different lengths in the transverse direction of the conveyor belt.

## Revendications

1. Installation de transport (1, 6), comprenant une courroie de transport (2, 7) avec une plaque de recouvrement côté support (3, 8) et une plaque de recouvrement côté roulement (4, 9), constituées chacune d'un matériau polymère ayant des propriétés élastiques et comprenant un porteur de traction encastré (13, 17) ainsi qu'un renforcement transversal (12, 16) disposé à l'intérieur de la plaque de recouvrement côté support et/ou côté roulement, la plaque de recouvrement côté roulement s'appuyant sur des rouleaux porteurs (5, 11), et ce en créant une première portion d'une installation de transport (1) avec une courroie de transport en auge (2) et une deuxième portion d'une installation de transport (6) avec une courroie de transport tubulaire (7), **caractérisée en ce que** le renforcement transversal (12, 16) de la courroie de transport (2, 7) se compose d'un matériau à mémoire de forme, le matériau à mémoire de forme étant configuré de telle sorte que le retour dans la forme initiale, qui se rapporte à la position étirée, est possible sous l'effet d'une impulsion extérieure.

2. Installation de transport selon la revendication 1, **caractérisée en ce que** le renforcement transversal (12, 16) se compose d'un polymère à mémoire de forme.

3. Installation de transport selon la revendication 1, **caractérisée en ce que** le renforcement transversal (12, 16) se compose d'un alliage à mémoire de forme.

4. Installation de transport selon l'une quelconque des revendications 1 à 3, **caractérisée en ce que** le renforcement transversal (16) présente au moins deux groupes de renforcement transversal, qui se caractérisent par une longueur différente dans la direction transversale de la courroie de transport.
